# EUROPÄISCHE PATENTSCHRIFT

(11) **EP 2 104 582 B1**
(45) Veröffentlichungstag und Bekanntmachung des Hinweises auf die Patenterteilung: **30.05.2012**
(21) Anmeldenummer: 07848066.2
(22) Anmeldetag: 11.12.2007
(51) Int. Cl.: B22F 7/02, B32B 15/04

(54) **HAFTFESTER METALL-KERAMIK-VERBUND UND VERFAHREN ZU SEINER HERSTELLUNG**
METAL-CERAMIC COMPOSITE WITH GOOD ADHESION AND METHOD FOR ITS PRODUCTION
COMPOSITE ADHÉRENT DE MÉTAL ET DE CÉRAMIQUE ET PROCÉDÉ POUR SA FABRICATION

(30) Priorität: 13.12.2006 DE 102006060338
(43) Veröffentlichungstag der Anmeldung: 30.09.2009
(73) Patentinhaber: Fraunhofer-Gesellschaft zur Förderung der angewandten Forschung e.V., 80686 München (DE)
(72) Erfinder: LENK, Reinhard, 01328 Dresden (DE); MORITZ, Tassilo, 09599 Freiberg (DE); BAUMANN, Andreas, 01219 Dresden (DE)
(74) Vertreter: Rauschenbach, Marion
(86) Internationale Anmeldenummer: PCT/EP2007/063745
(87) Internationale Veröffentlichungsnummer: WO 2008/071720

(56) Entgegenhaltungen:
- JP-A- 3 037 164
- JP-A- 11 139 885
- US-A- 5 935 722
- CHEN ZHONGCHUN ET AL: "Fabrication of composite pipes by multi-billet extrusion technique" J MATER PROCESS TECHNOL; JOURNAL OF MATERIALS PROCESSING TECHNOLOGY JUN 30 2003, Bd. 137, Nr. 1-3 SPEC, 30. Juni 2003 (2003-06-30), Seiten 10-16, XP002474424
- JUNG Y G ET AL: "Influence of the particle size and phase type of zirconia on the fabrication and residual stress of zirconia/stainless-steel 304 functionally gradient material" J MATER SCI; JOURNAL OF MATERIALS SCIENCE NOV 1 1999 KLUWER ACADEMIC PUBLISHERS, DORDRECHT, NETHERLANDS, Bd. 34, Nr. 21, 1. November 1999 (1999-11-01), Seiten 5407-5416, XP002474425

## Beschreibung

Die Erfindung bezieht sich auf das Gebiet der Werkstoffwissenschaften und betrifft einen haftfesten Metall-Keramik-Verbund, wie er beispielsweise für Umformwerkzeuge, Schneidwerkzeuge oder für medizinische Anwendungen als chirurgische Instrumente oder Dentalteile zur Anwendung kommen kann und ein Verfahren zu seiner Herstellung.

Aufgrund seiner hohen Härte, seiner Temperatur- und Verschleißbeständigkeit sowie seiner hohen chemischen Resistenz wird Zirkoniumoxid für ein breites Anwendungsspektrum als keramischer Konstruktionswerkstoff genutzt.
Um zu neuartigen Anwendungsmöglichkeiten zu gelangen, um neue Eigenschaftskombinationen zu kreieren und um die Nachteile einzelner Werkstoffe zu kompensieren werden Werkstoffverbunde hergestellt.

Einem Fügeverfahren, das eine dauerhafte und mechanisch stabile Verbindung dieser Werkstoffe miteinander gewährleistet, kommt deshalb eine große Bedeutung zu.
Stoffschlüssige Fügetechniken bieten gegenüber den mechanischen oder formschlüssigen Verbindungen den Vorteil einer gleichmäßigen Kraftübertragung sowie einer gasdichten und konstruktiv günstigeren Verbindungsform (Wielage, B.: Technische Keramik, Vulkanverlag, Essen, 1. Ausg., 1988, S. 158-161).

Nach dem Stand der Technik ist bekannt, auf fügetechnischem Weg (Aktivlöten) (Wielage, B.; Ashoff, D.: Aktivlöten von Ingenieurkeramik. Hart- und Hochtemperaturlöten. Vorträge des 9. Dortmunder Hochschulkolloquiums, 6./7. Dez. 1990, Dortmund: Deutscher Verlag für Schweißtechnik, S. 15-20) mehrkomponentige Bauteile aus Keramik und Metall herzustellen. Weiterhin werden durch Aufbrennen von Keramik auf Metallgrundkörper in der Dentaltechnologie verblendete Zahnimplantate hergestellt (Eichner, K.; Kappert, H.F.: Zahnärztliche Werkstoffe und Ihre Verarbeitung, Band 1-Grundlagen und Verarbeitung, Benetzbarkeit und Verbundbildende Eigenschaften. Georg Thieme Verlag (2000), 356-357).

Das aus dem kunststoffverarbeitenden Bereich stammende, großserientaugliche Formgebungsverfahren Mehrkomponentenspritzguss ist in der Lage, endkonturnah und geometrisch variabel zu fertigen. In der DE 196 52 223 A1 wird ein über thermoplastische Formgebung hergestellter Verbundformkörper beschrieben. Er besteht aus mindestens zwei keramischen und/oder pulvermetallurgischen Werkstoffen und aus mindestens einem thermoplastischen Binder und zeichnet sich dadurch aus, dass innerhalb des Formkörpers Teilvolumina vorhanden sind, die unterschiedliche stoffliche Zusammensetzung aufweisen und/oder die einen unterschiedlichen Gehalt an Teilchen des/der Werkstoff/e im thermoplastischen oder duroplastischen Binder aufweisen.
In der US 2003/0062660 wird ebenfalls die Herstellung von aus zwei oder mehr Komponenten bestehenden Formteilen via Mehrkomponentenpulverspritzguss, wahlweise aus keramischen und/oder metallischen Pulverwerkstoffen gefertigt, beschrieben.
In der DE 10 2004 006 954 A1 wird ein Verfahren zur Erstellung eines Materialverbundes beschrieben, der sich aus mindestens einer durch Pulverspritzguss hergestellten Komponente und mindestens einer mit einem anderen Verfahren als Pulverspritzguss hergestellten zweiten Komponente zusammensetzt. So können hier z.B. die mindestens zwei Komponenten vor dem Entbindern oder vor dem Sintern aneinander gefügt werden, wobei während der anschließenden Sinterung der durch Pulverspritzguss hergestellte Formkörper auf den durch ein anderes Verfahren als Pulverspritzguss hergestellten Formkörper aufschrumpft.

Eine stoffschlüssige Fügetechnik stellt das Aktivlöten dar. Da Keramikoberflächen aufgrund ihrer andersartigen Bindungsverhältnisse (Ionenbindung und kovalente Bindung) gegenüber metallischen Werkstoffen (Metallbindung) nicht von metallischen Schmelzen benetzt werden, werden Lotlegierungen verwendet, die sehr reaktive Elemente, wie Titanium, Zirkonium oder Hafnium enthalten. Die sogenannte aktive Lotkomponente bewirkt eine oberflächliche Dissoziation der Keramik mit einer anschließenden chemischen Reaktion zwischen dem Aktivmetall und der Keramik, die zur Ausbildung so genannter Reaktionsschichten am Interface Lot/Keramik führen. Über diese chemischen Wechselwirkungen wird eine Benetzung durch die Lotbasismetalle ermöglicht, und damit kann ein Lötverbund hergestellt werden. Die Eigenschaften der entstandenen Reaktionsschicht (Dichte, Härte, thermisches Ausdehnungsverhalten und E-Modul) beeinflussen maßgeblich die Eigenschaften des Werkstoffverbundes. Ein Metallisierungsschritt der Keramikoberfläche, wie er beim zweistufigen Löten erforderlich ist, entfällt. Erste Untersuchungen zum Aktivlöten wurden bereits vor mehr als 50 Jahren durchgeführt. Bis heute hat dieses Verfahren in der Leistungselektronik, besonders bei der Herstellung von Elektronenröhren, Vakuumschaltern, Überspannungsleitern und Thyristorgehäusen, im Maschinenbau sowie in der Energietechnik, z. B. für das Löten von keramischen Turboladerrotoren auf metallische Wellen, aufgelötete Schneidkeramiken, keramische Wärmetauscher, keramische Mikroreaktoren (Moritz, T.; u..a.: Int. J. Appl. Ceram. Technol., 6 (2005)2, 521-528), Brennkammerauskleidungen oder Strukturen im Bereich von Kernfusionsanlagen, Akzeptanz gefunden (Lugscheider, E.; Tillmann, W.: Werkstoffe und Innovationen, 5 (1992)5/6, 44-48).

An Aktivlote, über welche Keramik/Keramik- oder Keramik/Metall-Verbunde realisiert werden sollen, werden folgende Anforderungen gestellt:
- gute Benetzung von Keramik und Metall durch das Lot;
- Erzielung einer möglichst hohen Haftfestigkeit zwischen den zu verbindenden Bauteilen;
- hohe Duktilität des Lotes zum Abbau von Spannungen durch plastische Verformung;
- ausreichende thermische Stabilität und
- Ausbildung einer möglichst dünnen Reaktionsschicht auf der Keramikoberfläche, die eine Benetzung gestattet, aber gleichzeitig schädigende chemische Wechselwirkungen des Aktivmetalls mit der Keramik während des Einsatzes unterbindet.

Bekannt sind Aktivlötverbunde von ZrO₂ (sowohl MgO-stabitisiert, als auch Y₂O₃-stabilisiert) mit sich selbst und mit Stahl (Krappitz, H.; u.a.: Konferenz-Einzelbericht: DVS-Berichte, Bd. 125 (1989), S. 80-85, DVS-Verlag Düsseldorf).
Aufgrund des für Keramiken relativ hohen linearen thermischen Ausdehnungskoeffizienten von 10,4 · 10⁻⁶ K⁻¹ ist Zirkoniumoxidkeramik von den Konstruktionskeramiken der Werkstoff der Wahl für einen Verbund mit Stahl (linearer Ausdehnungskoeffizient Stahl 430 = 10,0 ... 11,5 · 10⁻⁶ K⁻¹).

Nachteilig bei dem beschriebenen Aktiv-Löt-Prozess ist, dass das Vorhandensein eines Hochvakuums erforderlich ist und die Lotmaterialien, zumeist Lote auf Kupfer- bzw. Kupfer/Silber-Basis, sehr teuer sind. Beim Aufbringen der Lote auf die Fügeflächen ist außerdem mit Verschnitt zu rechnen, insbesondere, wenn Ronden oder Ringflächen gefügt werden sollen. Ein weiteres Problem ist die Fixierung der beiden Fügepartner während des Lötprozesses.
Weiterhin wird in DE10327708A1 ein Löt-Verfahren zur Herstellung von gasdichten und hochtemperaturbeständigen Verbindungen von Formteilen aus nichtoxidischer Keramik mittels Laser beschrieben. Dabei wird ein Lot bestehend aus Yttriumoxid und/oder Zirkonoxid, Aluminiumoxid, Siliciumdioxid und Silicium verwendet, welches unter Lasereinwirkung auf der Fügefläche aufgeschmolzen wird und so ohne Schutzgasatmosphäre oder Vakuum zum stoffschlüssigen Verbinden von zwei bereits gesinterten Nichtoxidkeramiken führt.
Der Nachteil der aufgeführten Verfahren ist in erster Linie darin zu sehen, dass nur relativ einfache, ebene Fügeflächen miteinander verbunden werden können, da anderenfalls das Lot während des Fügens herauslaufen würde.

Metall-Keramik-Verbundsysteme kombinieren die vorteilhaften Eigenschaften der Metalle (hohe Zugfestigkeit) mit denen der Keramik (hohe Härte, chemische Resistenz, Biokompatibilität). Bei den dentaltechnischen Anwendungen werden Keramikmassen auf vorgefertigte Metallgerüste aufgebrannt. Der Grad der erreichbaren Benetzung beim Brennvorgang zwischen Metall und Keramik stellt das wesentliche Kriterium für das Zustandekommen eines haftfesten Materialverbundes dar (Krappitz, H.; u.a.: Konferenz-Einzelbericht: DVS-Berichte, Bd. 125 (1989), S. 80-85, DVS-Verlag Düsseldorf). Um einen stoffschlüssigen Verbund zwischen Metall und Keramik zu erhalten, werden so genannte Haftoxidbildner (diese können sein Ni, Cr, Be, Mn, Ti oder Si) eingesetzt. Eine Temperaturbehandlung an Luft oxidiert diese Elemente, so dass die entstandenen Oxide auf der Oberfläche des Gerüstmetallkörpers die chemische Bindung zur Keramik ermöglichen. Haftoxidbildner werden, sofern sie nicht in der Gerüstmetalllegierung in ausreichender Menge vorhanden sind, diesen zugegeben (Strietzel, R.: Metall-Keramik-Systeme, Physikalische Eigenschaften Teil I. Dental Labor, LIII (2005) 5, 847-851). Haftoxidbildner können bei einer Wärmebehandlung aus dem Inneren des Gerüstmetalls an dessen Oberfläche diffundieren und dort eine Oxidschicht bilden (Siebert, G.K.; u.a..: Deutsche Zahnärztliche Zeitschrift Z (1985) 40, 1163-1168; Walter, M.: Deutsche Zahnärztliche Zeitschrift Z (1989) 44, 248-253). Insbesondere dem Silicium werden wesentliche verbundbildende Eigenschaften attestiert. Es wird angenommen, dass dieses Element aufgrund seiner hohen Affinität zum Sauerstoff O₂-Brücken zwischen den SiO₂-Polymerketten bildet und so zum Verbund zwischen Metall und Keramik beiträgt.

Die nach dem Stand der Technik bekannten Verbundstrategien unter Zuhilfenahme von Haftoxidbildnern beziehen sich ausschließlich auf dentaltechnische Metall-Keramik-Verbunde und sind speziell auf Dentallegierungen abgestimmt. Die Herstellung entsprechender Verbunde ist werkstoff- wie prozesstechnisch mehrstufig und auf verblendete Dentalimplantate begrenzt.

Die Aufgabe der vorliegenden Erfindung besteht in der Angabe eines haftfesten Metall-Keramik-Verbundes, welcher unabhängig von der Art, Form und Struktur der zu fügenden Grenzflächen zwischen Keramik und Metall eine feste und dauerhafte Bindung aufweist und ein einfaches und preiswertes Verfahren zu seiner Herstellung.

Die Aufgabe wird durch die in den Ansprüchen angegebene Erfindung gelöst. Vorteilhafte Ausgestaltungen sind Gegenstand der Unteransprüche.

Der erfindungsgemäße haftfeste Metall-Keramik-Verbund besteht aus einer Zusammensetzung wie in Anspruch 4 formuliert.

Weiterhin ist es vorteilhaft, wenn die Verbindung Festigkeiten von mindestens 1 MPa aufweist.

Auch vorteilhaft ist es, wenn Silicium, Titanium, Chromium, Nickel, Mangan, Hafnium, Zirkonium, Aluminium in Form von reinen Elementen vor der Verbundbildung Oxiden, Mischoxiden oder intermetallischen Verbindungen im Bereich der Verbindungsflächen vorhanden sind.

Vorteilhaft ist es auch, wenn Silicium, Titanium, Chromium, Nickel, Mangan, Hafnium, Zirkonium, Aluminium nach der Verbundbildung in Form von reinen Elementen, Oxiden, Mischoxiden oder intermetallischen Verbindungen, die aus Elementen der beiden Komponenten entstanden sind, im Bereich der Verbindungsflächen vorhanden sind.

Ebenfalls vorteilhaft ist es, wenn die Metall- und die Keramikkomponente jeweils als Pulver eingesetzt und zu einem Verbundgrünkörper verarbeitet worden sind.

Von Vorteil ist es auch, wenn jeweils aus der Metall- und der Keramikkomponente ein Grünkörper hergestellt worden sind, die dann zu einem Gesamtgrünkörper verbunden worden sind.

Weiterhin von Vorteil ist es, wenn gemeinsame Sinterung bei Bedingungen für die Sinterung der Keramikkomponente durchgeführt worden sind.

Auch von Vorteil ist es, wenn im Bereich der Verbindungsflächen eine höhere Konzentration an Silicium, Titanium, Chromium, Nickel, Mangan, Hafnium, Zirkonium, Aluminium in Form von reinen Elementen, Oxiden, Mischoxiden oder intermetallischen Verbindungen vorliegt.
Vorteilhaft ist es auch, wenn die Konzentration an Silicium, Titanium, Chromium, Nickel, Mangan, Hafnium, Zirkonium, Aluminium in Form von reinen Elementen, Oxiden, Mischoxiden oder intermetallischen Verbindungen um mindestens 5 % höher ist als die Konzentration von an Silicium, Titanium, Chromium, Nickel, Mangan, Hafnium, Zirkonium, Aluminium und/oder deren organische Verbindungen in Form von reinen Elementen, Oxiden, Mischoxiden oder intermetallischen Verbindungen in beiden Komponenten.

Weiterhin vorteilhaft ist es, wenn der Bereich der Verbindungsflächen sowohl die unmittelbaren Oberflächen beider Komponenten als auch den Bereich, der unmittelbar an die Oberflächen anschließt, umfasst.

Auch vorteilhaft ist es, wenn Silicium, Titanium, Chromium, Nickel, Mangan, Hafnium, Zirkonium, Aluminium in Form von reinen Elementen, Oxiden, Mischoxiden oder intermetallischen Verbindungen als benetzende Materialien auf und zwischen den verbundenen Oberflächen der Komponenten vorliegen und gleichzeitig Silicium, Titanium, Chromium, Nickel, Mangan, Hafnium, Zirkonium, Aluminium in Form von reinen Elementen, Oxiden, Mischoxiden oder intermetallischen Verbindungen im Bereich der Verbindungsflächen unterhalb der Oberflächen vorliegen und/oder Silicium, Titanium, Chromium, Nickel, Mangan, Hafnium, Zirkonium, Aluminium dort eine chemische Verbindung mit einem oder mehreren Bestandteilen der Metall- und/oder Keramikkomponente eingegangen sind.

Das erfindungsgemäße Verfahren wird wie in Anspruch 1 durchgeführt.

Vorteilhaft ist es, wenn die Temperaturbehandlung bei Temperaturen > 1000 °C durchgeführt wird.

Ebenfalls vorteilhaft ist es, wenn die Temperaturbehandlung bei Temperaturen > 1300 °C durchgeführt wird.

Und auch vorteilhaft ist es, wenn die Metall- und/oder die Keramikkomponente als Pulver zu einem jeweils einzelnen Gründkörper oder zu einem Gesamtgrünkörper verarbeitet werden.

Weiterhin von Vorteil ist es, wenn einzelne Metall- und Keramikgrünkörper zu einem Gesamtgrünkörper verarbeitet werden.

Auch von Vorteil ist es, wenn aus Metall- und Keramikpulvern ein Gesamtgrünkörper hergestellt und gleichzeitig die Temperaturbehandlung durchgeführt wird.

Ebenfalls von Vorteil ist es, wenn die Temperaturbehandlung unter Wasserstoff oder wasserstoffhaltiger Atmosphäre durchgeführt wird.

Und auch von Vorteil ist es, wenn die Temperaturbehandlung unter Vakuum durchgeführt wird.

Der erfindungsgemäße Verbund zwischen den zu verbindenden metallischen und keramischen Materialien wird vorteilhafterweise auf die Weise erhalten, dass Keramikpulver und Metallpulver zu einem Pressgranulat, einer thermoplastischen Masse oder einer Suspension verarbeitet werden. Vorteilhafterweise werden beide pulverförmige Ausgangsmaterialien zu einem Werkstoffverbund verarbeitet. Dies kann beispielsweise erfolgen, indem
- beide Pressgranulate schichtweise miteinander verpresst werden, oder
- beide thermoplastische Massen über Mehrkomponentenspritzguss simultan oder sequentiell miteinander verbunden werden oder bereits vorgespritzte einkomponentige Teile mit der jeweiligen anderen thermoplastischen Masse anspritzt werden, oder
- aus Suspensionen gegossene Folien beider Materialien miteinander über Laminieren und/oder Kleben und/oder Pressen miteinander verbunden werden, oder
- aus Suspensionen gegossene Folien mit einer thermoplastischen Masse des anderen Materials angespritzt werden oder
- aus Suspensionen gegossene Folien mit einem Granulat des anderen Materials zu einem Verbundformkörper verpresst werden.

Beide zu einem Gesamtgrünkörper geformte Materialkomponenten werden gemeinsam entbindert, wobei die Entbinderung thermisch, durch Lösungsmittelextraktion, durch katalytische Zersetzung oder Kombinationen der genannten Verfahren erfolgen kann. Nachfolgend wird der Materialverbund einer Temperaturbehandlung unterzogen, die mindestens zur Versinterung der Keramik/Metallkomponente führt.

Die Verbundbildung erfolgt während der Temperaturerhöhung und während des Sinterprozesses des Gesamtgrünkörpers oder während der Verdichtung und gleichzeitigen Temperaturerhöhung von pulverförmigen Ausgangsstoffen, wobei das Metall- und/oder Keramikpulver 0,6 % Silicium bei Stahl und 0,03% Siliciumdioxid bei ZrO₂, enthält (siehe z.B. Tabelle 1 und 2). Dabei muss gewährleistet sein, dass mindestens eines der Pulver oder Komponenten Silicium und/oder eine organische Siliziumverbindung enthält. Das Silicium und/oder die Siliciumverbindungen diffundieren während der Temperaturerhöhung/Sinterprozess an die Grenzfläche zwischen Metall und Keramik. Dort benetzt das Silicium und/oder die Siliciumverbindungen die Keramik- und/oder Metalloberfläche und kann auch Verbindungen mit Bestandteilen der Keramik und/oder des Metalls eingehen. Im Falle von Zirkonoxidkeramik und Stahl als Verbundpartner kann sich im Bereich der Verbundfläche Zirkonsitikat bilden. Eine derartige Reaktion verbessert das Zustandekommen eines haftfesten Verbundes zwischen den Partnern Keramik und Metall. Das Vorhandensein von Silicium oder organischen Siliciumverbindungen kann durch eine Dotierung in den Ausgangsstoffen erfolgen oder auch durch Zugabe von organischen Siliciumprecursoren zu den Ausgangsstoffen. Außerdem können diverse siliciumorganische Verbindungen als Bestandteile der Pulver oder auch des Binders vorhanden sein. Verfahrensabhängig kann ein solcher Binderbestandteil (wahlweise auch Pulverbestandteil), vorzugsweise in unmittelbarer Nähe zur Fügezone, lokal aufkonzentriert sein, wie beispielsweise eine Folie, bei der im Mehrschichtverfahren eine an sich vom Pulver identische Packung in veränderter Binderzusammensetzung (mit Silanen, Silazanen) realisiert wird.

Innovative Strategien für haftfeste sinterstabile Verbunde zwischen Keramik und Metall zu erzielen, stehen im Mittelpunkt aktueller Forschungen. Die Kombination der physikalischen Eigenschaften (spröde - duktil, isolierend - elektrisch leitfähig, nicht magnetisch - magnetisch, etc.) der beiden artfremden Werkstoffe in einem Bauteil, erhöht die Funktionsdichte, wodurch die benötigten geometrischen Abmaße miniaturisiert werden können.
Aufgrund des hohen Automatisierungsgrades, der Großserientauglichkeit, der hohen Maßhaltigkeit und der endkonturnahen Bauteilfertigung wird innerhalb der pulvertechnologischen Routen der Mehrkomponenten-Pulverspritzguss als Verfahren der Wahl zur technischen Realisierung von Metall-Keramik-Verbunden angesehen. Der Fügeschritt (Coshaping) zwischen keramischer und metallischer Spritzgussmasse (Feedstock) kann in-situ durch sequenzielles oder additives Spritzen in die Werkzeugform erfolgen. Anschließend wird der Verbundspritzling als Gesamtgrünkörper einer für beide Fügepartner gemeinsamen Entbinderung und Sinterung (Cofiring) unterzogen.

Nachfolgend wird die Erfindung an mehreren Ausführungsbeispielen näher erläutert.

### Beispiel 1

### (Stahl-Feedstock/ZrO₂-Feedstock, Si als Dotierungselement im Stahl)

**Tabelle 1 - Spezifikationen ausgewählter Edelstahlpulver**

| Typ | Cr | Cu | Ni | Mn | Si | Nb | Mo | N | O | C | P | S | Fe |
|---|---|---|---|---|---|---|---|---|---|---|---|---|---|
| 430L | 16,9 | - | - | 0,7 | 0,6 | - | - | - | - | 0,02 | 0,03 | 0,007 | Rest |
| 17-4PH | 16,2 | 4,3 | 4,2 | 0,5 | 0,5 | 0,3 | 0,2 | 0,1 | 0,3 | 0,05 | 0,03 | 0,004 | Rest |

| | | |
|---|---|---|
| Stahlfeedstock: | Tabelle 2 - Spezifikation ausgewähltes | |
| Typ 17-4PH; Füllgrad 55Vol.-% | ZrO2-Pulver | |
| | Typ | Y5-5 |
| Keramikfeedstock: | Y₂O₃ | 5,2 |
| Pulver: ZrO₂ (3mol% Y) Typ Y5-5 | Al₂O₃ | 0,34 |
| Pulverhersteller: United Ceramics Ltd. | SiO₂ | 0,03 |
| Füllgrad: 60Vol.-% | Fe₂O₃ | 0,02 |
| | Na₂O | - |
| | TiO₂ | 0,08 |
| | ZrO₂+HfO₂ | Rest |

Das verwendete Stahlpulver17-4PH ist mit Silicium legiert (siehe Tabelle 1 und 2). Zur Feedstockherstellung wird als Keramikpulver ZrO₂ vom Typ Y5-5 mit thermoplastischen Bindern unter Temperatur- und Scherenergieeinwirkung auf einem Scherwalzenkompaktor vermengt. In gleicher Weise erfolgt die Herstellung des Spritzgießfeedstocks aus dem Stahlpulver. Das homogenisierte Pulver-Binder-Gemisch wird granuliert und in dieser Form dem Spritzgießprozess zugeführt. Das Spritzen der Stahl- und der Keramikkomponente erfolgte sequentiell auf einer 2-Komponenten-Spritzgießmaschine. Die beiden Spritzgießformkörper werden übereinander gelegt und gemeinsam entbindert(Luftatmosphäre 400°C) und gemeinsam gesintert (H₂-Atmosphäre 1450°C), bei denen der entstehende Verbundformkörper von der Bindemittelphase befreit und unter identischem Schwindungsbetrag auf annähernd den, den Fügepartnern entsprechenden Werkstoffdichten, dicht gesintert wird.
Nach der Sinterbehandlung wird ein temperaturwechselbeständiger Stahl-Keramikverbund, welcher mindestens eine 4-Punkt- Biegebruchfestigkeit von 1,2 MPa aufweist, erhalten. Bei einer Schliffpräparation der Fügezone ist unter dem Elektronenmikroskop eine durchgehend geschlossene (weil benetzte) Verbundzone mit zum Teil röntgenographisch nachweisbaren Fremdphasenbestandteilen (Zirkoniumsilikat) zu erkennen.

### Beispiel 2 (nicht zur Erfindung gehörig)

### (Si als pulverförmiger Zusatz)

Zur Verbundherstellung wird ein mit Stahlpulver 430 gefüllter Feedstock eingesetzt. Das verwendete Stahlpulver ist dabei mit Silicium legiert. Zur Keramikfeedstockherstellung wird als Keramikpulver ZrO₂ vom Typ Y5-5, welches mit 1% Silicium dotiert wurde, mit einem thermoplastischen Binder unter Temperatur- und Scherenergieeinwirkung auf einem Scherwalzenkompaktor vermengt. In gleicher Weise erfolgt die Herstellung des Spritzgießfeedstocks aus dem Stahlpulver. Das homogenisierte Pulver-Binder-Gemisch wird granuliert und in dieser Form dem Spritzgießprozess zugeführt.. Das Spritzen der Stahl- und der Keramikkomponente erfolgte sequentiell auf einer 2-Komponenten-Spritzgießmaschine. Die beiden Spritzgießformkörper werden übereinander gelegt und gemeinsam entbindert(Luftatmosphäre 400°C) und gemeinsam gesintert (H₂-Atmosphäre 1450°C), bei denen der entstehende Verbundformkörper von der Bindemittelphase befreit und unter identischem Schwindungsbetrag auf annähernd den, den Fügepartnern entsprechenden Werkstoffdichten, dicht gesintert wird.
Nach der Sinterbehandlung wird ein temperaturwechselbeständiger Stahl-Keramikverbund, welcher mindestens eine 4-Punkt Biegebruchfestigkeit von 1,5 MPa aufweist, erhalten. Bei einer Schliffpräparation der Fügezone ist unter dem Elektronenmikroskop eine durchgehend geschlossene (weil benetzte) Verbundzone mit zum Teil röntgenographisch nachweisbaren Fremdphasenbestandteilen (Zirkoniumsilikat) zu erkennen.

## Patentansprüche

1. Verfahren zur Herstellung eines haftfesten Metall-Keramik-Verbundes, bei dem eine Metallkomponente bestehend aus Stahl mit der Zusammensetzung Cr 16,2 Cu 4,3 Ni 4,2 Mn 0,5 Si 0,5 Nb 0,3 Mo 0,2 N 0,1 O 0,3 C 0,05 P 0,03 S 0,004 Fe Rest und eine Keramikkomponente bestehend aus ZrO₂ mit einer Zusammensetzung Y₂O₃ 5,2 Al₂O₃ 0,34 SiO₂ 0,03 Fe₂O₃ 0,02 TiO₂ 0,08 ZrO₂+HfO₂ Rest, als Gesamtgrünkörper verbunden werden, indem sie als thermoplastische Massen mit einem Füllgrad für Stahl von 55 Vol.-% und mit einem Füllgrad für die ZrO₂-Komponente von 60 Vol.-% über Mehrkomponentenspritzguss simultan oder sequentiell miteinander verbunden werden oder bereits vorgespritzte einkomponentige Teile mit der jeweils anderen thermoplastischen Masse angespritzt werden, und als Gesamtgrünkörper gemeinsam entbindert und einer Temperaturbehandlung mindestens zur Sinterung der Keramikkomponente unterzogen werden, wobei beide Komponenten unter Sinterbedingungen eine Schwindung mit einem Unterschied von ≤ 1 % zeigen und wobei sie an ihren Verbindungsflächen stoff- oder stoff- und kraftschlüssig miteinander verbunden werden, und wobei mindestens eine der Metall- und/oder Keramikkomponenten Silicium, Titanium, Chromium, Nickel, Mangan, Hafnium, Zirkonium, Aluminium im Bereich der Verbindungsflächen aufweisen.

2. Verfahren nach Anspruch 1, bei dem die Temperaturbehandlung bei Temperaturen > 1000 °C, vorteilhafterweise bei Temperaturen > 1300 °C durchgeführt wird, und/oder die Temperaturbehandlung unter Wasserstoff oder wasserstoffhaltiger Atmosphäre und/oder unter Vakuum durchgeführt wird, wobei vorteilhafterweise aus Metall- und Keramikpulvern ein Gesamtgrünkörper hergestellt und gleichzeitig die Temperaturbehandlung durchgeführt wird.

3. Verfahren nach Anspruch 1, bei dem die Metall- und/oder die Keramikkomponente als Pulver zu einem jeweils einzelnen Grünkörper oder zu einem Gesamtgrünkörper verarbeitet werden, wobei vorteilhafterweise einzelne Metall- und Keramikgrünkörper zu einem Gesamtgrünkörper verarbeitet werden.

4. Haftfester Metall-Keramik-Verbund hergestellt nach mindestens einem der Ansprüche 1 bis 3, bestehend aus einer Metallkomponente bestehend aus Stahl mit einer Zusammensetzung Cr 16,2 Cu 4,3 Ni 4,2 Mn 0,5 Si 0,5 Nb 0,3 Mo 0,2 N 0,3 O 0,3 C 0,05 P 0,03 S 0,004 Fe Rest und einer Keramikkomponente bestehend aus ZrO₂ mit einer Zusammensetzung Y₂O₃ 5,2 Al₂O₃ 0,34 SiO₂ 0,03 Fe₂O₃ 0,02 TiO₂ 0,08 ZrO₂+HfO₂ Rest, wobei beide Komponenten unter Sinterbedingungen eine Schwindung mit einem Unterschied von ≤ 1 % zeigen und an ihren Verbindungsflächen stoff- oder stoff- und kraftschlüssig miteinander verbunden sind, wobei mindestens eine der Komponenten des Verbundes vor und nach der Verbundherstellung Silicium, Titanium, Chromium, Nickel, Mangan, Hafnium, Zirkonium, Aluminium im Bereich der Verbindungsfläche in höherer Konzentration enthält.

5. Verbund nach Anspruch 4, bei dem die Verbindung Festigkeiten von mindestens 1 MPa aufweist.

6. Verbund nach Anspruch 4, bei dem Silicium, Titanium, Chromium, Nickel, Mangan, Hafnium, Zirkonium, Aluminium in Form von reinen Elementen vor der Verbundherstellung Oxiden, Mischoxiden oder intermetallischen Verbindungen im Bereich der Verbindungsflächen vorhanden sind, wobei der Bereich der Verbindungsflächen sowohl die unmittelbaren Oberflächen beider Komponenten als auch den Bereich, der unmittelbar an die Oberflächen anschließt, umfasst.

7. Verbund nach Anspruch 4, bei dem Silicium, Titanium, Chromium, Nickel, Mangan, Hafnium, Zirkonium, Aluminium nach der Verbundherstellung in Form von reinen Elementen, Oxiden, Mischoxiden oder intermetallischen Verbindungen, die aus Elementen der beiden Komponenten entstanden sind, im Bereich der Verbindungsflächen vorhanden sind, wobei der Bereich der Verbindungsflächen sowohl die unmittelbaren Oberflächen beider Komponenten als auch den Bereich, der unmittelbar an die Oberflächen anschließt, umfasst.

8. Verbund nach Anspruch 4, bei dem die Metall- und die Keramikkomponente jeweils als Pulver eingesetzt und zu einem Verbundgrünkörper verarbeitet worden sind, und/oder jeweils aus der Metall- und der Keramikkomponente ein Grünkörper hergestellt worden sind, die dann zu einem Gesamtgrünkörper verbunden worden sind, wobei vorteilhafterweise die gemeinsame Sinterung bei Bedingungen für die Sinterung der Keramikkomponente durchgeführt worden ist.

9. Verbund nach Anspruch 4, bei dem im Bereich der Verbindungsflächen eine höhere Konzentration an Silicium, Titanium, Chromium, Nickel, Mangan, Hafnium, Zirkonium, Aluminium und/oder deren organische Verbindungen in Form von reinen Elementen, Oxiden, Mischoxiden oder intermetallischen Verbindungen vorliegt, wobei vorteilhafterweise die Konzentration an Silicium, Titanium, Chromium, Nickel, Mangan, Hafnium, Zirkonium, Aluminium in Form von reinen Elementen, Oxiden, Mischoxiden oder intermetallischen Verbindungen um mindestens 5 % höher ist als die Konzentration von an Silicium, Titanium, Chromium, Nickel, Mangan, Hafnium, Zirkonium, Aluminium in Form von reinen Elementen, Oxiden, Mischoxiden oder intermetallischen Verbindungen in beiden Komponenten.

10. Verbund nach Anspruch 4, bei dem Silicium, Titanium, Chromium, Nickel, Mangan, Hafnium, Zirkonium, Aluminium und/oder deren organische Verbindungen in Form von reinen Elementen, Oxiden, Mischoxiden oder intermetallischen Verbindungen als benetzende Materialien auf und zwischen den verbundenen Oberflächen der Komponenten vorliegen und gleichzeitig Silicium, Titanium, Chromium, Nickel, Mangan, Hafnium, Zirkonium, Aluminium in Form von reinen Elementen, Oxiden, Mischoxiden oder intermetallischen Verbindungen im Bereich der Verbindungsflächen unterhalb der Oberflächen vorliegen und/oder Silicium, Titanium, Chromium, Nickel, Mangan, Hafnium, Zirkonium, Aluminium dort eine chemische Verbindung mit einem oder mehreren Bestandteilen der Metall- und/oder Keramikkomponente eingegangen sind.

## Claims

1. Process for producing a metal-ceramic composite having good adhesion, wherein a metal component consisting of steel having the composition Cr 16.2 Cu 4.3 Ni 4.2 Mn 0.5 Si 0.5 Nb 0.3 Mo 0.2 N 0.1 O 0.3 C 0.05 P 0.03 S 0.004 Fe as balance and a ceramic component consisting of ZrO₂ having a composition Y₂O₃ 5.2 Al₂O₃ 0.34 SiO₂ 0.03 Fe₂O₃ 0.02 TiO₂ 0.08 ZrO₂+HfO₂ as balance are joined as total green body by joining them simultaneously or sequentially with one another as thermoplastic compositions having a degree of fill for steel of 55% by volume and a degree of fill for the ZrO₂ components of 60% by volume by means of multicomponent injection moulding or previously injection-moulded one-component parts having the respective other thermoplastic composition injection moulded onto them, and are jointly subjected as total green body to binder removal and to a heat treatment at least for sintering the ceramic component, where both components display a shrinkage under sintering conditions having a difference of ≤ 1% and are joined to one another adhesively or adhesively and frictionally at their joining interfaces and at least one of the metal and/or ceramic components comprise silicon, titanium, chromium, nickel, manganese, hafnium, zirconium, aluminium in the region of the joining interfaces.

2. Process according to Claim 1, wherein the heat treatment is carried out at temperatures of > 1000°C, advantageously at temperatures of > 1300°C and/or the heat treatment is carried out under hydrogen or a hydrogen-containing atmosphere and/or under reduced pressure, where a total green body is advantageously produced from metal and ceramic powders and the heat treatment is carried out at the same time.

3. Process according to Claim 1, wherein the metal component and/or the ceramic component are processed as powder to give in each case individual green bodies or a total green body, where individual metal and ceramic green bodies are advantageously processed to give a total green body.

4. Metal-ceramic composite having good adhesion produced according to at least one of Claims 1 to 3, which consists of a metal component consisting of steel having a composition Cr 16.2 Cu 4.3 Ni 4.2 Mn 0.5 Si 0.5 Nb 0.3 Mo 0.2 N 0.3 O 0.3 C 0.05 P 0.03 S 0.004 Fe as balance and a ceramic component consisting of ZrO₂ having a composition Y₂O₃ 5.2 Al₂O₃ 0.34 SiO₂ 0.03 Fe₂O₃ 0.02 TiO₂ 0.08 ZrO₂+HfO₂ as balance where both components display a shrinkage under sintering conditions having a difference of ≤ 1% and are adhesively or adhesively and frictionally joined to one another at their joining interfaces and at least one of the components of the composite contains silicon, titanium, chromium, nickel, manganese, hafnium, zirconium, aluminium in a higher concentration in the region of the joining interface before and after production of the bond.

5. Composite according to Claim 4, wherein the bond has strengths of at least 1 MPa.

6. Composite according to Claim 4, wherein silicon, titanium, chromium, nickel, manganese, hafnium, zirconium, aluminium are present before production of the bond in the form of pure elements, oxides, mixed oxides or intermetallic compounds in the region of the bonding interfaces, where the region of the bonding interfaces encompasses both the direct surfaces of the two components and also the region directly adjoining the surfaces.

7. Composite according to Claim 4, wherein silicon, titanium, chromium, nickel, manganese, hafnium, zirconium, aluminium are present in the form of pure elements, oxides, mixed oxides or intermetallic compounds formed from elements of the two components are present in the region of the joining interfaces after production of the bond, where the region of the joining interfaces encompasses both the direct surfaces of the two components and also the region directly adjoining the surfaces.

8. Composite according to Claim 4, wherein the metal component and the ceramic component have each been used as powders and processed to give a composite green body and/or a green body has been produced in each case from the metal component and the ceramic component and have then been joined to give a total green body, where the joint sintering has advantageously been carried out under conditions for the sintering of the ceramic component.

9. Composite according to Claim 4, wherein a higher concentration of silicon, titanium, chromium, nickel, manganese, hafnium, zirconium, aluminium and/or organic compounds thereof is present in the form of pure elements, oxides, mixed oxides or intermetallic compounds in the region of the joining interfaces, where the concentration of silicon, titanium, chromium, nickel, manganese, hafnium, zirconium, aluminium in the form of pure elements, oxides, mixed oxides or intermetallic compounds is at least 5% higher than the concentration of silicon, titanium, chromium, nickel, manganese, hafnium, zirconium, aluminium in the form of pure elements, oxides, mixed oxides or intermetallic compounds in the two components.

10. Composite according to Claim 4, wherein silicon, titanium, chromium, nickel, manganese, hafnium, zirconium, aluminium and/or organic compounds thereof are present in the form of pure elements, oxides, mixed oxides or intermetallic compounds as wetting materials on and between the joined surfaces of the components and at the same time silicon, titanium, chromium, nickel, manganese, hafnium, zirconium, aluminium are present in the form of pure elements, oxides, mixed oxides or intermetallic compounds in the region of the joining interfaces below the surfaces and/or silicon, titanium, chromium, nickel, manganese, hafnium, zirconium, aluminium have there formed a chemical compound with one or more constituents of the metal component and/or ceramic component.

## Revendications

1. Procédé pour la préparation d'un composite métal-céramique adhérent, dans lequel un composant métallique constitué d'acier présentant la composition Cr 16,2 Cu 4,3 Ni 4,2 Mn 0,5 Si 0,5 Nb 0,3 Mo 0,2 N 0,1 O 0,3 C 0,05 P 0,03 S 0,004 Fe = reste et un composant céramique constitué de ZrO₂ présentant la composition Y₂O₃ 5,2 Al₂O₃ 0,34 SiO₂ 0,03 Fe₂O₃ 0,02 TiO₂ 0,08 ZrO₂ + HfO₂ = reste, sont assemblés en tant que corps cru global, en ce qu'ils sont assemblés l'un avec l'autre simultanément ou séquentiellement en tant que masses thermoplastiques présentant un degré de remplissage pour l'acier de 55% en volume et un degré de remplissage pour le composant ZrO₂ de 60% en volume via un moulage par injection à plusieurs composants ou des pièces à un composant déjà moulées par injection au préalable sont soumises à une injection par à chaque fois l'autre masse thermoplastique, et ils sont, en tant que corps cru global, ensemble soumis à une élimination de liant et à un traitement thermique au moins pour le frittage des composants céramiques, les deux composants présentant, dans les conditions de frittage, un retrait d'une différence ≤ 1% et étant assemblés l'un avec l'autre au niveau de leurs surfaces d'assemblage, par liaison de matière ou par liaison de matière et à force et au moins un des composants métalliques et/ou céramiques présentant du silicium, du titane, du chrome, du nickel, du manganèse, de l'hafnium, du zirconium, de l'aluminium dans la zone des surfaces d'assemblage.

2. Procédé selon la revendication 1, dans lequel le traitement thermique est réalisé à des températures > 1000°C, avantageusement à des températures > 1300°C, et/ou le traitement thermique est réalisé sous hydrogène ou une atmosphère contenant de l'hydrogène et/ou sous vide, en produisant avantageusement un corps cru global à partir de poudres métalliques et céramiques et en réalisant simultanément le traitement thermique.

3. Procédé selon la revendication 1, dans lequel le composant métallique et/ou le composant céramique est/sont transformé(s) sous forme de poudre en un corps cru à chaque fois individuel ou un en corps cru global, les différents corps crus métallique et céramique étant avantageusement transformés en un corps cru global.

4. Composite métal-céramique adhérent produit selon au moins l'une quelconque des revendications 1 à 3, constitué par un composant métallique constitué d'acier présentant la composition Cr 16,2 Cu 4,3 Ni 4,2 Mn 0,5 Si 0,5 Nb 0,3 Mo 0,2 N 0,3 0 0,3 C 0,05 P 0,03 S 0,004 Fe = reste et un composant céramique constitué de ZrO₂ présentant la composition Y₂O₃ 5,2 Al₂O₃ 0,34 SiO₂ 0,03 Fe₂O₃ 0,02 TiO₂ 0,08 ZrO₂ + HfO₂ = reste, les deux composants présentant, dans les conditions de frittage, un retrait d'une différence ≤ 1% et étant assemblés l'un avec l'autre au niveau de leurs surfaces d'assemblage, par liaison de matière ou par liaison de matière et à force, au moins un des composants du composite contenant, avant et après la production du composite, du silicium, du titane, du chrome, du nickel, du manganèse, de l'hafnium, du zirconium, de l'aluminium dans la zone des surfaces d'assemblage en concentration élevée.

5. Composite selon la revendication 4, dans lequel l'assemblage présente des résistances d'au moins 1 MPa.

6. Composite selon la revendication 4, dans lequel le silicium, le titane, le chrome, le nickel, le manganèse, l'hafnium, le zirconium, l'aluminium sont présents avant la production du composite sous forme d'éléments purs, d'oxydes, d'oxydes mixtes ou de composés intermétalliques dans la zone des surfaces d'assemblage, la zone des surfaces d'assemblage incluant les surfaces immédiates des deux composants ainsi que la zone qui se rattache directement aux surfaces.

7. Composite selon la revendication 4, dans lequel le silicium, le titane, le chrome, le nickel, le manganèse, l'hafnium, le zirconium, l'aluminium sont présents après la production du composite sous forme d'éléments purs, d'oxydes, d'oxydes mixtes ou de composés intermétalliques, qui sont formés à partir des éléments des deux composants, dans la zone des surfaces d'assemblage, la zone des surfaces d'assemblage incluant les surfaces immédiates des deux composants ainsi que la zone qui se rattache directement aux surfaces.

8. Composite selon la revendication 4, dans lequel le composant métallique et le composant céramique ont à chaque fois été utilisés sous forme de poudre et transformés en un corps cru composite et/ou dans lequel un corps cru a été préparé à chaque fois à partir du composant métallique et du composant céramique, qui ont ensuite été assemblés en corps cru global, le frittage commun ayant avantageusement été réalisé dans des conditions pour le frittage du composant céramique.

9. Composite selon la revendication 4, dans lequel se trouve, dans la zone des surfaces d'assemblage, une concentration élevée en silicium, titane, chrome, nickel, manganèse, hafnium, zirconium, aluminium et/ou leurs composés organiques, sous forme d'éléments purs, d'oxydes, d'oxydes mixtes ou de composés intermétalliques, la concentration en silicium, titane, chrome, nickel, manganèse, hafnium, zirconium, aluminium sous forme d'éléments purs, d'oxydes, d'oxydes mixtes ou de composés intermétalliques étant supérieure d'au moins 5% à la concentration en silicium, titane, chrome, nickel, manganèse, hafnium, zirconium, aluminium sous forme d'éléments purs, d'oxydes, d'oxydes mixtes ou de composés intermétalliques dans les deux composants.

10. Composite selon la revendication 4, dans lequel le silicium, le titane, le chrome, le nickel, le manganèse, l'hafnium, le zirconium, l'aluminium et/ou leurs composés organiques se trouvent sous forme d'éléments purs, d'oxydes, d'oxydes mixtes ou de composés intermétalliques comme matériaux mouillants sur et entre les surfaces assemblées des composants et simultanément, le silicium, le titane, le chrome, le nickel, le manganèse, l'hafnium, le zirconium, l'aluminium sous forme d'éléments purs, d'oxydes, d'oxydes mixtes ou de composés intermétalliques se trouvent dans la zone des surfaces d'assemblage sous les surfaces et/ou le silicium, le titane, le chrome, le nickel, le manganèse, l'hafnium, le zirconium, l'aluminium y sont entrés dans une liaison chimique avec un ou plusieurs constituants du composant métallique et/ou céramique.
